# EUROPÄISCHE PATENTANMELDUNG

(11) **EP 1 205 834 A2**
(43) Veröffentlichungstag der Anmeldung: **15.05.2002**
(21) Anmeldenummer: 01440363.8
(22) Anmeldetag: 26.10.2001
(51) Int. Cl.: G06F 1/00

(54) **Verfahren zum Speichern eines Sicherheitsschlüssels und Mehrrechnersystem zur Durchführung des Verfahrens**

(30) Priorität: 09.11.2000 DE 10055424
(71) Anmelder: ALCATEL, 75008 Paris (FR)
(72) Erfinder: Nayeri, Nader, Dr., 13509 Berlin (DE)
(74) Vertreter: Rausch, Gabriele, Dr.

(57) **Zusammenfassung**

Die Erfindung betrifft ein Verfahren zum Speichern eines Sicherheitsschlüssels in einem Mehrrechnersystem mit zwei oder mehr identischen Einzelrechnern (CE1, CE2, CE3) sowie ein Mehrrechnersystem zur Durchführung des Verfahrens, wobei eine sichere Schlüsselablage dadurch erreicht wird, dass der Sicherheitsschlüssel in mehrere Teilschlüssel (K1, K2, K3) zerlegt wird und in jedem Einzelrechner (CE1, CE2, CE3) ein bestimmter Teilschlüssel (K1, K2, K3) gespeichert wird.

## Beschreibung

Die Erfindung betrifft ein Verfahren zum Speichern eines Sicherheitsschlüssels in einem Mehrrechnersystem mit zwei oder mehr identischen Einzelrechnern gemäß Anspruch 1 sowie ein Mehrrechnersystem zur Durchführung des Verfahrens gemäß Anspruch 3.

Mehrrechnersysteme, die über nicht sichere Übertragungswege miteinander kommunizieren, müssen sich über einen Sicherheitsschlüssel authentifizieren. Dies fordert die CENELEC-Norm 50159-2. Unter nichtsicherer Übertragungsweg ist dabei beispielsweise ein einkanaliger Übertragungsweg des öffentlichen Fernsprechnetzes, ISDN, SIEMENS-Profibus oder Ethernet zu verstehen. Der Sicherheitsschlüssel wird für jedes einzelne Mehrrechnersystem von dem Hersteller bzw. einer übergeordneten Instanz vergeben. Ein einmal zugeordneter Sicherheitsschlüssel soll möglichst während der gesamten Lebensdauer des Mehrrechnersystems gelten, wobei es darauf ankommt, dass dieser Sicherheitsschlüssel von unberechtigten Dritten nicht oder nur mit größtem Aufwand auslesbar oder reproduzierbar ist. Das System muss in der Lage sein, eine Manipulation oder unberechtigte Schlüsselentnahme zu erkennen und entsprechende Maßnahmen beispielsweise Selbstabschaltung, einzuleiten.

Bekannt ist die Speicherung des Sicherheitsschlüssels in einem kryptographischen Chip, der von außen nicht ohne weiteres zugänglich ist. Diese Chip-Speicherung gilt jedoch nicht als sicher im Sinne der oben genannten CENELEC-Norm. Insbesondere für sicherheitsrelevante Anwendungen von Mehrrechnersystemen für bahntechnische Komponenten, wie Achszähler, Stellwerke und Streckensignale, ist darüber hinaus eine sehr lange, unter Umständen mehrere jahrzehnte betragende, Lebensdauer sicherzustellen.

Der Erfindung liegt die Aufgabe zugrunde, ein Verfahren der oben genannten Gattung anzugeben, das sich durch extrem hohe Sicherheit, sehr geringer Manipulationsgefahr und dennoch einfache und kostengünstige Realisierbarkeit auszeichnet.

Erfindungsgemäß wird die Aufgabe mit den kennzeichnenden Merkmalen des Anspruchs 1 gelöst. Das Grundprinzip der Lösung besteht darin, den Sicherheitsschlüssel in mehrere Teilschlüssel zu zerlegen und auf die Einzelrechner des Mehrrechnersystems zu verteilen. Auf diese Weise ergibt sich eine sehr hohe Sicherheit gegen Manipulationen und Entschlüsselung. Die Forderungen der CENELEC-Norm 50159-2 sind erfüllt. Selbst wenn es einem unberechtigten Dritten quasi in einem Sabotageakt gelingen sollte, einen Teilschlüssel zu regenerieren, ist die Sicherheit des Gesamtsystems noch nicht gefährdet. Zusätzliche Hardware-Kosten, z.B. für einen verkapselten Speicherchip zur Verwaltung des Sicherheitsschlüssels, fallen nicht an. Die Teilschlüssel-Lösung ist außerdem wesentlich flexibler als die Hardware-Lösung. Die Größe- bzw. Bitlänge der Teilschlüssel, die den auch als Replicas bezeichneten identischen Einzelrechnern zugeordnet werden, kann sehr unterschiedlich gehandhabt werden. Auch müssen nicht alle Einzelrechner für die Speicherung von Teilschlüsseln vorgesehen sein. Außerdem können weitere Hindernisse beim korrekten Zusammensetzen der Teilschlüssel, beispielsweise Überlappungen von Bitsequenzen, vorgesehen sein. Durch ein ausgeklügeltes Handling der Sicherheitsschlüssel von deren Erzeugung bis zum Abspeichervorgang ist die Sicherheitsgarantie während der gesamten Lebensdauer des Sicherheitsschlüssels gegeben.

Zur Regeneration des Sicherheitsschlüssels ist gemäß Anspruch 2 ein Voting-Modus vorgesehen. Ziel des Votings ist es, eine Mehrheitsentscheidung ohne Inanspruchnahme einer weiteren Instanz zu erreichen. Das Voting läuft dabei folgendermaßen ab:
1. Alle Einzelrechner senden über entsprechende innere Datenkanäle ihre Rechenergebnisse sowie den jeweils gespeicherten Teilschlüssel an alle weiteren Einzelrechner.
2. Jeder Rechner setzt die Teilschlüssel zu dem Sicherheitsschlüssel zusammen und vergleicht sein eigenes Ergebnis mit den jeweiligen Ergebnissen der anderen Einzelrechner.
3. Ein Ergebnis wird erst dann als korrekt eingestuft, wenn eine vorgegebene Anzahl von Einzelrechnern zu demselben Ergebnis gekommen ist.
4. Sollten mehrere Einzelrechner feststellen, dass ein weiterer Einzelrechner falsche Ausgaben produziert, so können diese ihn abschalten.

Auf diese Weise ist gewährleistet, dass ein korrekter und vollständiger Sicherheitsschlüssel nicht gebildet werden kann, wenn nur ein Einzelrechner funktionsfähig ist, da immer eine Mehrheitsentscheidung vorliegen muss.

Anspruch 3 bezieht sich auf ein Mehrrechnersystem, bei dem jeder Einzelrechner Speichermittel zur Speicherung eines Teilschlüssels aufweist, wobei mittels des Voting-Modus jeder Einzelrechner die Teilschlüssel in einer bestimmten Reihenfolge zu einem kompletten Sicherheitsschlüssel zusammensetzt und die Ergebnisse aller Teilrechner miteinander verglichen werden.

Vorzugsweise handelt es sich bei dem Mehrrechnersystem um ein 2 von 3 Rechnersystem gemäß Anspruch 4. Das bedeutet, dass 3 identische Einzelrechner bzw. Replicas vorgesehen sind, von denen mindestens 2 bei dem Voting-Prozess zu dem gleichen Ergebnis gekommen sein müssen, damit dieses Mehrheitsergebnis als korrekt angesehen wird. Ein typisches 2 von 3 Rechnersystem dieser Art stellt die sogenannte TAS-Pfattform der Alcatel SEL AG dar. Diese TAS-Plattform bildet die Rechnerbasis für diverse sicherheitsrelevante Applikationen im Transportsektor, insbesondere im Bahnbereich. Dabei geht es primär um die sensorische bzw. messtechnische Erfassung sicherheitsrelevanter Zustondsgrößen, wie beispielsweise Weichenstellungen, Signalstellungen und durch Achszähler ermittelte Gleisfreimeldsignale, welche über unsichere Übertragungswege, beispielsweise ISDN, SIEMENS-Profibus oder Ethernet, an entsprechende Auswerteeinrichtungen, beispielsweise Stellwerke, übermittelt werden müssen. Um die Fehlerrate zu minimieren, werden die entsprechenden Rechnersysteme als dreikanalige Rechner, d.h. mit 3 identischen Einzelrechnern ausgelegt, welche parallel. zueinander die gleichen Datenverarbeitungsprozesse ausführen und ihre Ergebnisse mittels Voting vergleichen. Ein korrekter und vollständiger Sicherheitsschlüssel kann folglich nur generiert werden, wenn mindestens 2 der 3 Rechner zu dem gleichen Ergebnis gekommen sind.

Für diesen Zweck sind die Einzelrechner gemäß Anspruch 5 über ein internes Bussystem miteinander verbunden. Das Bussystem gestattet eine Einzelrechner-Einzelrechner-Kommunikation, in der auch das Voting gemanaget wird. Eingriffe von außen, durch die auch der Sicherheitsschlüssel zugänglich wäre, sind durch diverse Sicherheitsmaßnahmen, die nicht Gegenstand der vorliegenden Beschreibung sind, quasi ausgeschlossen.

Gemäß Anspruch 6 fungiert ein bestimmter Einzelrechner als Ausgaberechner zur Weitergabe des Ergebnisses der Mehrheitsentscheidung an eine externe Schnittstelle.

Die Erfindung wird nachfolgend anhand eines figürlich dargestellten Ausführungsbeispiels näher erläutert.

Die Fig. zeigt eine schematische Darstellung eines 2 von 3 Rechnersystems mit Kommunikationskanälen.

Das Rechnersystem besteht im wesentlichen aus drei identischen, parallelen Einzelrechnern CE1, CE2 und CE3 (Computing Elements), welche über ein Bussystem IB (Internal Bus) miteinander vernetzt sind. Der Einzelrechner CE1 ist mit einer Schnittstelle El (External Interface) zur Weitergabe gevoteter Ergebnisse der Einzelrechner CE1, CE2 und CE3 verbunden. In jedem der Einzelrechner CE1, CE2 und CE3 ist ein Teilschlüssel K1, K2 und K3 (Keys) eingespeichert. Die Verteilung dieser Teilschlüssel, K1, K2 und K3 erfolgt bei der Herstellung des Rechnersystems durch ein Sicherheitsmanagement, wobei unterschiedliche Übertragungswege nach Art der bekannten PINs und zugehöriger Smart-Cards genutzt werden. Dadurch wird das Risiko der Entschlüsselung des Sicherheitsschlüssels minimiert. Das Laden der Teilschlüssel K1, K2 und K3 in die zugeordneten Einzelrechner CE1, CE2 und CE3 erfolgt völlig unabhängig voneinander in separaten Arbeitsschritten. Das Bussystem IB dient nur zur internen Kommunikation zwischen den Einzelrechnern CE1, CE2 und CE3 und ist nicht von außen zugänglich. Jeder Einzelrechner CE1, CE2 und CE3 berechnet mit Hilfe der durch das Bussystern IB ausgetauschten Teilschlüssel K1, K2 und K3 den kompletten Sicherheitsschlüssel. Die berechneten Sicherheitsschlüssel werden einem Mehrheits-Voting zugeführt und in RAMs (Random Access Memory) der Einzelrechner CE1, CE2 und CE3 gespeichert. Auf diese Weise ist das Verfahren noch funktionsfähig, wenn ein Einzelrechner CE1, CE2 oder CE3 defekt ist. Falls zwei oder sogar sämtliche Einzelrechner CE1, CE2, CE3 defekt sind, wird kein Sicherheitsschlüssel ausgegeben, wodurch entsprechende Maßnahmen, beispielsweise Abschaltung des Rechnersystems, initiiert werden. Anderenfalls wird das Ergebnis des Datenverarbeitungsprozesses über den Einzelrechner CE1 und dessen Schnittstelle El zur Weiterverarbeitung ausgegeben. Der Sicherheitsschlüssel dient dabei vor allem der Authentifizierung des Rechnersystems bei der Kommunikation über nicht sichere Übertragungswege mit anderen Rechnersystemen. Der Einzelrechner CE1 kann derart konfiguriert sein, dass über die Schnittstelle El keine Möglichkeit besteht, zu dem RAM, in welchem der Sicherheitsschlüssel abgelegt ist, Zugang zu bekommen. Letztlich erfordert eine Entschlüsselung des Sicherheitsschlüssels die Verfügungsgewalt über mindestens zwei der drei Einzelrechner CE1, CE2, CE3. Ein derartiger unberechtigter Eingriff kann jedoch leicht erkannt und durch bestimmte Maßnahmen, beispielsweise Selbstzerstörung der Software, verhindert werden.

Die Erfindung beschränkt sich nicht auf das vorstehend angegebene Ausführungsbeispiel. Vielmehr ist eine Anzahl von Varianten denkbar, welche auch bei grundsätzlich andersgearteter Ausführung von den Merkmalen der Erfindung gebrauch machen.

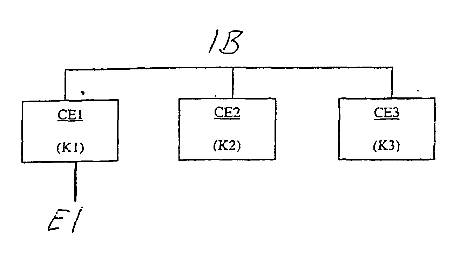

## Patentansprüche

1. Verfahren zum Speichern eines Sicherheitsschlüssels in einem Mehrrechnersystem mit zwei oder mehr identischen Einzelrechnern (CE1, CE2, CE3),
**dadurch gekennzeichnet,**
**dass** der Sicherheitsschlüssel in mehrere Teilschlüssel (K1, K2, K3) zerlegt wird und in jeden Einzelrechner (CE1, CE2, CE3) ein bestimmter Teilschlüssel (K1, K2, K3) gespeichert wird.

2. Verfahren nach Anspruch 1,
**dadurch gekennzeichnet, dass** die Teilschlüssel (K1, K2, K3) zur Regeneration des Sicherheitsschlüssels gevoted werden.

3. Mehrrechnersystem mit zwei oder mehr identischen Einzelrechnern (CE1, CE2, CE3) zur Durchführung des Verfahrens nach einem der vorangehenden Ansprüche,
**dadurch gekennzeichnet,**
**dass** jeder Einzelrechner (CE1, CE2, CE3) Speichermittel zur Speicherung eines Teilschlüssels (K1, K2, K3) aufweist, wobei die in bestimmter Reihenfolge zusammensetzbaren Teilschlüssel (K1, K2, K3) einen Sicherheitsschlüssel repräsentieren.

4. Mehrrechnersystem nach Anspruch 3,
**gekennzeichnet durch** die Ausbildung als 2 von 3 Rechnersystem.

5. Mehrrechnersystem nach Anspruch 3 oder 4,
**dadurch gekennzeichnet, dass** die Einzelrechner (CE1, CE2, CE3) über ein internes Bussystem (IB) miteinander verbunden sind.

6. Mehrrechnersystem nach einem der Ansprüche 3 bis 5,
**dadurch gekennzeichnet, dass** ein bestimmter (CE1) der Einzelrechner (CE1, CE2 oder CE3) mit einer externen Schnittstelle (El) versehen ist.
